# FASCICULE DE BREVET EUROPEEN

(11) **EP 0 813 013 B1**
(45) Date de publication et mention de la délivrance du brevet: **28.02.2001**
(21) Numéro de dépôt: 97401281.7
(22) Date de dépôt: 06.06.1997
(51) Int. Cl.: F16L 21/00

(54) **Dispositif de raccord pour tuyauteries pourvu de moyens de serrage**
Rohrleitungsverbindung mit Spannvorrichtung
Pipeline connection with clamping device

(30) Priorité: 13.06.1996 FR 9607345
(43) Date de publication de la demande: 17.12.1997
(73) Titulaire: Société de Tolerie Industrielle Française S.A. S.T.I.F., 49170 Saint-Georges-sur-Loire (FR)
(72) Inventeur: Guerid, Lucien, 49120 La Tourlandry (FR)
(74) Mandataire: Wagret, Frédéric

(56) Documents cités:
- WO-A-90/01655

## Description

La présente invention concerne un dispositif permettant de raccorder les extrémités respectives de deux tuyauteries, tubes, conduits ou similaires, par exemple du type pneumatique en matériau souple ou rigide, et pourvu de moyens de serrage assurant l'étanchéité au niveau de la jonction entre les deux extrémités des tuyauteries.

On connaît de tels dispositifs réalisés à l'aide d'une feuille de métal, en acier inox par exemple, dont les deux bords parallèles à la direction des tuyauteries, sont repliés sur eux-mêmes pour former un U, vu en section transversale. La plaque ou feuille métallique est alors pliée pour former une enveloppe cylindrique à l'intérieur de laquelle sont disposées les extrémités des tuyauteries à raccorder.

Les côtés repliés en U forment des panneaux de serrage disposés en vis-à-vis, soumis à rapprochement par des moyens de serrage de types connus (boulons), pour serrer les extrémités des tuyauteries correspondantes.

Afin de rigidifier les panneaux de serrage en U, il est prévu dans l'espace intérieur de chaque panneau en U, une pièce de raidissement en métal, appelée communément étau, de forme allongée à section quadrangulaire et sensiblement complémentaire audit U. Selon la taille du raccord et des tuyauteries correspondantes, lesdits étaux présentent une longueur équivalente sensiblement à la longueur du raccord, une hauteur sensiblement équivalente à l'espace intérieur dudit U, et une épaisseur (dans la direction transversale) de l'ordre de 8 à 15mm. Ces étaux de raidissement sont en général en aluminium, alors que la feuille constituant le raccord lui-même est en acier ou équivalent.

Ce dispositif de raccord connu présente des inconvénients.

En premier lieu, il fait appel à trois éléments distincts, à savoir la feuille constituant le raccord, et les deux étaux de raidissement. Ceci accroît d'autant la complexité de fabrication.

Par ailleurs, la présence de trois pièces distinctes, crée des problèmes au moment du montage, notamment d'alignement de ces pièces les unes par rapport aux autres, dû aux perforations associées aux vis et écrous de serrage.

De plus, les étaux de raidissement présentent fréquemment, compte tenu de leur constitution en aluminium, des défauts de surface.

On comprend donc que l'art antérieur présente des désavantages en termes économiques et de sécurité.

La présente invention vise à remédier à ces inconvénients et propose un raccord et son procédé de fabrication, qui, tout en conservant les qualités de résistance et de fiabilité en terme d'étanchéité, soit facile et économique à fabriquer, et qui soit susceptible d'être réalisé de manière automatisée, diminuant ainsi les coûts, et réduisant les défauts de surface.

A cette fin, selon l'invention, le dispositif pour raccorder- de manière étanche les extrémités de deux tuyauteries ou similaires, réalisé à partir d'une feuille métallique sensiblement quadrangulaire, et comprenant une partie formant une enveloppe ouverte cylindrique apte à recevoir les tuyauteries, les deux bords parallèles longitudinaux de ladite feuille étant prolongés chacun par un panneau de serrage, les deux panneaux de serrage se faisant face, et étant associés à des moyens de serrage permettant, par rapprochement, le serrage des tuyauteries, est caractérisé en ce que chacun des panneaux de serrage est constitué d'au moins deux pans sensiblement plans de ladite feuille et repliés l'un contre l'autre.

Le raccord de l'invention, formé d'une pièce monobloc, est plus facile à réaliser, avec les économies et l'accroissement de sécurité qui en résultent.

Avantageusement, les panneaux de serrage sont constitués de trois pans, ou plus, repliés ou disposés ou plaqués les uns sur les autres.

L'augmentation du nombre de pans repliés permet d'accroître la rigidité des panneaux de serrage.

Avantageusement, les panneaux sont repliés les uns sur les autres par pliages successifs, de manière à comporter, pour trois pans, de l'intérieur vers l'extérieur, un premier pan raccordé par un coude en U à un second pan, lui-même raccordé par un second coude, opposé au premier, à un troisième pan, lui-même relié au bord de ladite feuille.

De préférence, la feuille est réalisée en acier.

L'invention concerne également un procédé de réalisation de tels raccords, caractérisé par les étapes suivantes :
- on découpe, dans une feuille de tôle métallique, une plaque de forme quadrangulaire, et de préférence rectangulaire;
- deux des bords parallèles de ladite plaque sont ensuite enroulés sur eux-mêmes en spirale, selon au moins une révolution, et de préférence plusieurs révolutions;
- les bords enroulés sont soumis à une pression sensiblement perpendiculaire à ladite plaque de manière à aplatir lesdits enroulements, chaque bord formant ainsi un panneau de serrage constitué d'une série de pans parallèles disposés les uns contre les autres; et
- on plie la feuille sur elle-même, dans le sens longitudinal, de manière à conformer ladite feuille en forme d'enveloppe cylindrique destinée à accueillir les tuyauteries.
- on dispose les panneaux de serrage, sensiblement à angle droit de la plaque, par pliage le long du bord de jonction entre le panneau et la plaque.

L'invention sera bien comprise à la lumière de la description qui suit, se rapportant à un exemple illustratif et non limitatif, en relation avec les dessins annexés, dans lesquels :
- la figure 1 est une vue en perspective schématique du raccord selon l'invention;
- la figure 2 est une vue en coupe transversale dudit raccord (sans les moyens de serrage); et
- les figures 3A, 3B, 3C, 3D, 3E, 3F, montrent schématiquement les différentes étapes successives d'un exemple de procédé de fabrication du raccord de l'invention.

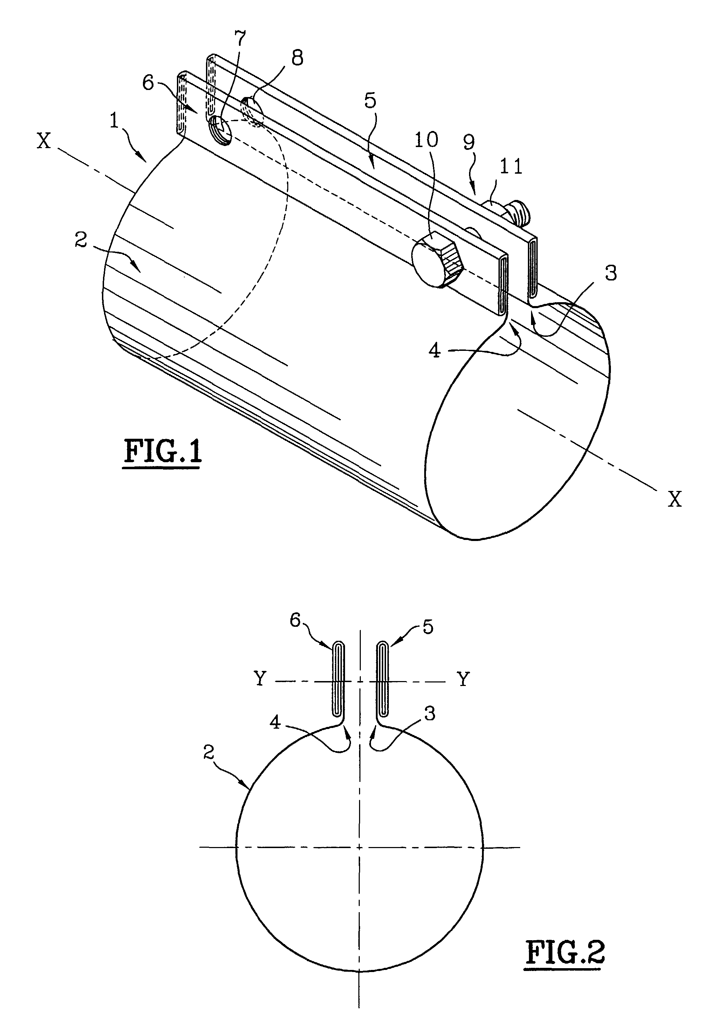

Comme montré sur la figure 1, en vue perspective schématique, le raccord de l'invention portant la référence générale 1 est de forme générale allongée selon un axe X-X colinéaire à l'axe longitudinal des tuyauteries destinées à être raccordées.

Le raccord comporte ainsi trois parties, à savoir :
- une enveloppe de forme générale cylindrique et référencée 2, apte à accueillir les extrémités des tuyauteries, ladite enveloppe étant ouverte le long de deux bords longitudinaux se faisant face, respectivement 3 et 4; et
- deux panneaux de serrage 5 et 6, de forme générale quadrangulaires allongées, et prolongeant ladite enveloppe 2, au-delà des bords 3 et 4 longitudinaux de ladite enveloppe 2.

Les panneaux de serrage 5 et 6 sont disposés en regard, et espacés l'un de l'autre, dans la position représentée sur la figure 1.

Sur les figures, pour des raisons de commodité, les panneaux de serrage sont représentés parallèles l'un à l'autre. Ceci peut correspondre à la position au repos (desserrée), mais en position serrée, les panneaux sont inclinés légèrement pour former une sorte de V inversé. Les panneaux de serrage peuvent être alors considérés comme sensiblement parallèles.

Les panneaux de serrage 5 et 6 sont associés à des moyens de serrage, représentés partiellement sur la figure 1. Les moyens de serrage comprennent au moins un boulon, et de préférence deux, voire trois, en fonction de la longueur dans le sens longitudinal (axe X-X) du raccord.

Le ou les boulon(s) est(sont) associé(s) à des lumières traversant les panneaux de serrage 5 et 6. Ainsi, selon l'exemple représenté sur la figure 1, il est prévu deux lumières sur chacun des panneaux, pour le passage de deux boulons. Plus précisément, le panneau 6 comporte une lumière 7 de forme circulaire et en regard de laquelle est prévue une lumière de même forme et de même taille, référencée 8, sur l'autre panneau 5. Les lumières 7 et 8 sont prévues pour être traversées par la vis d'un boulon.

Sur la figure 1, pour des raisons de clarté, le boulon associé aux lumières 7 et 8 n'a pas été représenté. Inversement, le boulon 9, représenté sur la figure 1 constitué d'une vis 10 et d'un écrou 11, est représenté, étant entendu que ledit boulon 9 traverse des lumières (non représentées) prévues sur les panneaux 5 et 6 respectivement.

On comprend que le serrage des écrous (tel que 11) des boulons (tels que 9) entraîne le rapprochement des panneaux de serrage 5 et 6, et donc le serrage, par l'enveloppe 2, des tuyauteries (non représentées) disposées dans ladite enveloppe.

Egalement pour des raisons de clarté, il n'a pas été représenté un manchon intérieur ouvert longitudinalement, et susceptible d'entourer les extrémités des tuyauteries à raccorder. Ledit manchon intérieur est destiné à assurer l'étanchéité de la jonction des extrémités des tuyauteries, tandis que l'enveloppe extérieure 2 (faisant partie du raccord de l'invention) elle-même entoure et serre mécaniquement le manchon intérieur.

Sur la figure 2, on a représenté de manière schématique une vue en coupe transversale (perpendiculaire à l'axe X-X), du raccord de la figure 1; on retrouve les mêmes organes et éléments, portant les mêmes références. L'axe Y-Y symbolise l'axe des boulons 9 et lumières 7,8 associées.

Les panneaux de serrage 5 et 6 forment un coude avec les bords 3 et 4 respectifs de l'ouverture formée par l'enveloppe 2.

Les panneaux de serrage sont formés, selon l'invention, de différents pans de la même feuille constituant l'enveloppe 2 et disposés les uns contre les autres. De préférence, les différents pans sont repliés les uns sur les autres, selon une sorte de spirale aplatie, et ces derniers sont plaqués les uns contre les autres pour former un panneau rigide.

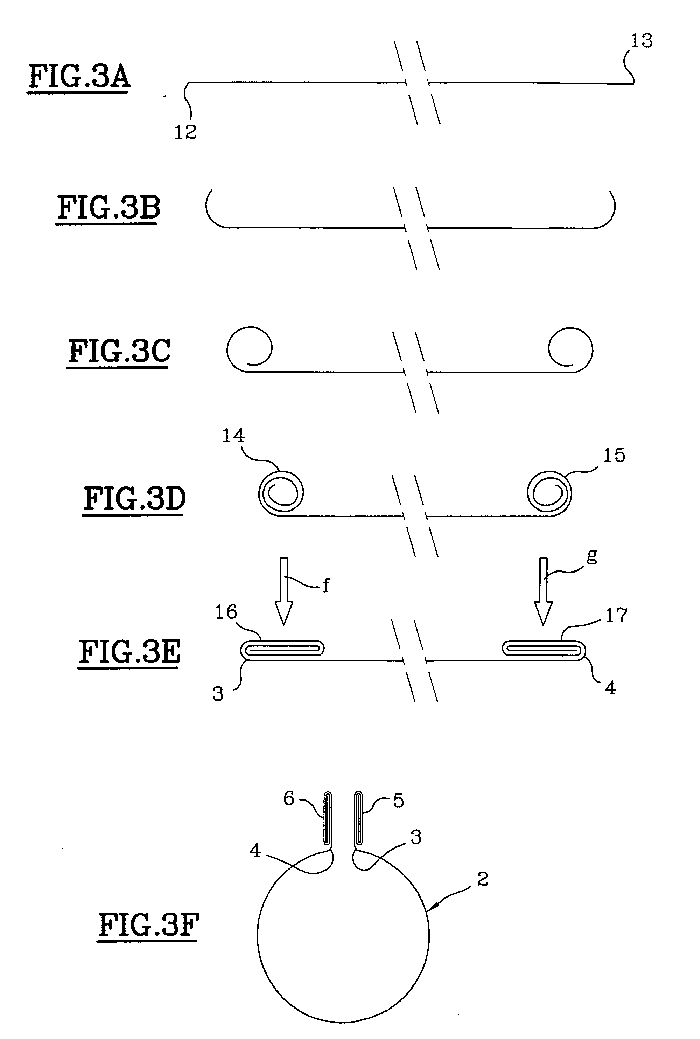

Le raccord de l'invention, et plus particulièrement les panneaux de serrage, est réalisé de la manière suivante, selon un procédé faisant l'objet de la présente demande, et décrit ci-après en relation avec les figures 3A à 3F.

Ces dernières représentent de façon schématique les différentes étapes successives de fabrication du raccord, étant entendu que, pour des raisons de clarté et de compréhension, les échelles et proportions respectives n'ont pas été strictement observées, lesdites figures ayant pour but de montrer le principe des différentes étapes de traitement de la feuille métallique servant à constituer le raccord de l'invention.

Sur la figure 3A, on a représenté en vue de côté (vue donc selon la tranche de la feuille), une feuille ou plaque de métal, en acier inox ou autres matériaux adéquats pour constituer les raccords. La feuille est représentée dans un plan transversal à la direction longitudinale X-X du raccord et des tuyauteries, ladite direction X-X étant perpendiculaire au plan des figures 3A à 3F.

A titre d'exemple, la feuille de métal est rectangulaire et présente une largeur (selon le côté représenté sur la figure 3A) comprise entre 10mm et 200mm, tandis que la longueur (dans une direction transversale à la figure 3A, et parallèlement à l'axe longitudinal X-X) est comprise entre 100 et 300 mm.

La seconde étape, représentée sur la figure 3B, consiste à amorcer un enroulement de la feuille, selon ses deux bords longitudinaux 12 et 13, parallèles à l'axe X-X. Cette amorce d'enroulement peut être réalisée à l'aide de tout moyen approprié, tel que par exemple par application d'une poussée de direction et densité variable, au bord de la feuille, par tout moyen approprié, tel que pincement par exemple.

Le processus d'enroulement, selon une forme générale cylindrique est poursuivi, pour aboutir en une étape intermédiaire représentée sur la figure 3C, où l'on voit les bords 12 et 13 respectifs repliés à l'intérieur du cylindre formé par l'enroulement.

Le processus d'enroulement du bord de la feuille sur lui-même est poursuivi, jusqu'à obtenir un enroulement interne, en forme de spirale, tel que celui montré sur la figure 3D.

Chaque enroulement est ensuite soumis à une pression transversale au plan de ladite feuille, et symbolisé par les flèches f et g, pour aplatir les enroulements, portant les références 14 et 15 (figure 3D). On obtient ainsi, comme montré sur la figure 3E, une succession respectivement 16, 17 de pans de la même feuille, de forme plane et portant les uns contre les autres. Chacune des successions de pans 16, 17 correspond aux panneaux de serrage 5,6.

Comme indiqué précédemment, pour des raisons de commodité, et pour mieux faire comprendre le procédé de l'invention, les pans résultant de l'écrasement des enroulements 14 et 15, sont montrés sur la figure 3E avec un espace intermédiaire, alors que suite aux pressions (flèches f et g) auxquelles sont soumis les enroulements 14 et 15, les séries respectives 16 et 17 de pans aplatis, portent les uns contre les autres, sans quasiment aucun espace intermédiaire d'un pan à l'autre. Cette forme de réalisation n'est qu'une variante préférée, et les pans peuvent, dans d'autres formes de réalisation, être soumis à un écrasement ou aplatissement partiel conduisant à un espace intermédiaire entre deux pans voisins, ce qui conduirait à une forme de réalisation telle que montrée sur la figure 3E.

Ensuite, les dernières étapes incluent dans un ordre quelconque, le plus approprié en fonction des conditions économiques et de fabrication :
- le perçage de lumières dans les panneaux pour le passage des boulons de serrage;
- le pliage des séries 16 et 17 de pans successifs aplatis, selon une ligne de jonction séparant ladite série du bord 3 et 4 respectivement de la feuille, selon un angle droit sensiblement;
- le pliage de la feuille elle-même, pour former l'enveloppe cylindrique 2, et aboutir ainsi à la forme de réalisation représentée sur la figure 3F, correspondant à celle de la figure 2.

On comprend que le raccord de l'invention présente les avantages suivants, par rapport à l'art antérieur, tout en conservant les caractéristiques et propriétés de fiabilité et solidité requises :
- le raccord, constitué à partir d'une seule feuille de métal, est donc de structure monobloc; en conséquence, sa réalisation s'en trouve facilitée, et il présente un coût réduit;
- les panneaux de serrage ou étaux présentent des caractéristiques de rigidité accrue, compte-tenu de la constitution de ces derniers sous forme de différents pans repliés et plaqués les uns contre les autres, et présentant un coefficient de frottement important entre eux.
- le nombre de pans repliés les uns sur les autres, pour constituer un panneau, n'est pas limité, sauf pour des raisons pratiques, d'encombrement ou d'économie. Ainsi, on comprend que plus le nombre de pans repliés et rabattus les uns sur les autres est important, plus le panneau ou étau de serrage est rigide; il est donc possible a priori de régler ou ajuster en quelque sorte la rigidité des panneaux ou étaux de serrage, par le nombre de pans repliés.
- enfin, le raccord de l'invention s'affranchit des difficultés d'alignement des lumières 7 et 8 appelées à être disposées en regard l'une de l'autre, et prévues sur chacun des panneau ou étau de serrage, puisque ce dernier est réalisé de façon monobloc, alors que dans l'art antérieur il est constitué de deux pièces différentes, dont les trous, réalisés à l'occasion d'étapes différentes, doivent être alignés.

Les moyens de serrage, constitués dans l'exemple représenté par des boulons, n'est pas limité à ce moyen en particulier, mais inclut toute variante, de même que le nombre de boulons, l'emplacement des lumières correspondantes, le type de métal constituant la feuille et les dimensions du raccord.

Egalement, en variante, le procédé de l'invention peut faire appel (en partant de la plaque montrée à la figure 3A), à une étape de pliage de chaque pan longitudinal, qui est ensuite rabattu à plat sur la plaque. Le pan rabattu et le pan contigu de la plaque, disposés l'un contre l'autre, sont alors pliés ensemble puis rabattus à leur tour sur la plaque, et ce, pour chaque côté longitudinal de la plaque.

## Revendications

1. Procédé de réalisation de dispositif pour raccorder de manière étanche les extrémités de deux tuyauteries ou analogues, dans lequel on découpe, dans une feuille de tôle métallique, une plaque de forme quadrangulaire, et de préférence rectangulaire;
caractérisé en ce que deux des bords parallèles de ladite plaque sont ensuite enroulés sur eux-mêmes en spirale,de forme générale cylindrique selon au moins une révolution, et de préférence plusieurs révolutions, et en ce que les bords enroulés en spirale cylindrique sont soumis ensuite à une pression sensiblement perpendiculaire au plan de ladite plaque de manière à aplatir lesdits enroulements, chaque bord formant ainsi un panneau de serrage constitué d'une série de pans parallèles disposés les uns contre les autres.

2. Procédé selon la revendication 1, caractérisé en ce que l'on dispose les panneaux de serrage sensiblement à angle droit de la plaque, par pliage le long du bord de jonction entre le panneau et la plaque, et l'on plie la feuille sur elle-même, dans le sens longitudinal, de manière à conformer ladite feuille en forme d'enveloppe cylindrique destinée à accueillir les tuyauteries à raccorder.

3. Dispositif pour raccorder de manière étanche les extrémités de deux tuyauteries ou analogues, réalisé selon le procédé de la revendication 1, du type comprenant une feuille métallique sensiblement quadrangulaire, dont les deux bords parallèles longitudinaux sont prolongés chacun par un panneau de serrage, les deux panneaux de serrage se faisant face, et étant associés à des moyens de serrage permettant, par rapprochement, le serrage des tuyauteries, chacun des panneaux de serrage étant constitué d'au moins deux pans sensiblement plans de ladite feuille disposés l'un contre l'autre.

4. Dispositif selon la revendication 3, caractérisé en ce que les panneaux de serrage sont constitués de trois pans ou plus disposés les uns contre les autres.

5. Dispositif selon la revendication 4, caractérisé en ce que chaque panneau comporte trois pans, à savoir de l'intérieur vers l'extérieur, un premier pan raccordé par un coude en U à un second pan, lui-même raccordé par un second coude, opposé au premier, à un troisième pan, lui-même relié au bord de ladite feuille.

6. Dispositif selon l'une des revendications 3 à 5, caractérisé en ce que la feuille est réalisée en acier.

## Patentansprüche

1. Verfahren zur Herstellung einer Vorrichtung zur dichten Verbindung der Enden von zwei Rohrleitungen oder ähnlichem, wobei man aus dem Blatt eines Metallbleches eine Platte in viereckiger Form und vorzugsweise rechteckig ausschneidet; dadurch gekennzeichnet, dass die parallelen Ränder der Platte um sich selbst in einer Spirale mit einer allgemein zylindrischen Form, um zumindest eine Umdrehung und vorzugsweise um mehrere Umdrehungen, aufgerollt werden, und dadurch, dass die in einer zylindrischen Spirale eingerollten Ränder sodann einem zur Ebene der Platte im Wesentlichen rechtwinkligen Druck ausgesetzt werden, um die Einrollungen abzuflachen, so dass jeder Rand einen Verklemmungsflansch formt, gebildet aus einer Reihe von aneinander angeordneten parallelen Feldern.

2. Verfahren nach Anspruch 1, dadurch gekennzeichnet, dass die Flansche zur Verklemmung im Wesentlichen in einem rechten Winkel zur Platte angeordnet werden, durch Biegen entlang des Verbindungsrandes zwischen dem Flansch und der Platte und dadurch, dass das Blech selbst in Längsrichtung gebogen wird, zur Anpassung des Bleches an die Form einer zylindrischen Hülle, bestimmt zur Aufnahme der zu verbindenden Rohrleitungen.

3. Vorrichtung zur dichten Verbindung der Enden von zwei Rohrleitungen oder ähnlichem, realisiert gemäß dem Verfahren nach Anspruch 1, umfassend ein im Wesentlichen viereckiges Metallblech, dessen zwei parallele Längsränder jeweils durch einen Verklemmungsflansch verlängert sind, wobei die zwei Verklemmungsflansche sich gegenüber liegen und mit Einrichtungen zur Verklemmung verbunden sind, die durch Annäherung die Verklemmung der Rohrleitungen ermöglichen, wobei jede der Verklemmungsflansche aus zumindest zwei im Wesentlichen ebenen Flanschen des Bleches gebildet sind, die aneinander angeordnet sind.

4. Vorrichtung nach Anspruch 3, dadurch gekennzeichnet, dass die Verklemmungsflansche aus drei der mehr aneinander angeordneten Flanschen gebildet sind.

5. Vorrichtung nach Anspruch 4, dadurch gekennzeichnet, dass jeder Flansch drei Felder umfasst, von innen nach außen, ein erstes durch einen U-Knick mit einem zweiten Feld verbundenes Feld, welches selbst durch einen zweiten Knick, gegenüber dem ersten, mit einem dritten Feld verbunden ist, das selbst mit dem Rand des Bleches verbunden ist.

6. Vorrichtung nach einem der Ansprüche 3 bis 5, dadurch gekennzeichnet, dass das Blech aus Stahl ist.

## Claims

1. Process for making a device for tightly connecting the ends of two pipes or the like, in which a plate of quadrangular, and preferably rectangular shape, is cut out from a metal sheet;
characterized in that two of the parallel edges of said plate are then wound on themselves in a spiral of generally cylindrical shape of at least one revolution, and preferably a plurality of revolutions, and in that the edges wound in a cylindrical spiral are then subjected to a pressure substantially perpendicular to the plane of said plate so as to flatten said windings, each edge thus forming a clamping panel constituted by a series of parallel faces disposed against one another.

2. Process according to Claim 1, characterized in that the clamping panels are arranged substantially at right angles to the plate, by bending along the edge of join between the panel and the plate, and the sheet is bent on itself, in the longitudinal direction, so as to form said sheet into the shape of a cylindrical envelope intended to receive the pipes to be connected.

3. Device for tightly connecting the ends of two pipes or the like, made according to the process of Claim 1, of the type comprising a substantially quandrangular metal sheet of which the two longitudinal parallel edges are each extended by a clamping panel, the two clamping panels being opposite each other, and being associated with clamping means allowing the pipes to be clamped by being brought closer, each of the clamping panels being constituted by at least two substantially planar faces of said sheet arranged against one another.

4. Device according to Claim 3, characterized in that the clamping panels are constituted by three or more faces arranged against one another.

5. Device according to Claim 4, characterized in that each panel comprises three faces, namely, from the inside to the outside, a first face joined by a U-bend to a second face, itself joined by a second bend, opposite the first, to a third face, itself connected to the edge of said sheet.

6. Device according to one of Claims 3 to 5, characterized in that the sheet is made of steel.
